# EUROPÄISCHE PATENTANMELDUNG

(11) **EP 4 390 586 A1**
(43) Veröffentlichungstag der Anmeldung: **26.06.2024**
(21) Anmeldenummer: 22215322.3
(22) Anmeldetag: 21.12.2022
(51) Int. Cl.: G05B 19/408, G06F 9/445, G06F 21/51

(54) **VERFAHREN ZUM BETRIEB EINER PRODUKTIONS- ODER WERKZEUGMASCHINE SOWIE PRODUKTIONS- ODER WERKZEUGMASCHINE**

(71) Anmelder: Siemens Aktiengesellschaft, 80333 München (DE)
(72) Erfinder: Männer, Andres, 09236 Claußnitz OT Diethensdorf (DE)
(74) Vertreter: Siemens Patent Attorneys

(57) **Zusammenfassung**

Bei einem Verfahren zum Betrieb einer Produktions- oder Werkzeugmaschine (10), die eine Steuerung (17) zur Steuerung von Aktoren (19) der Produktions- oder Werkzeugmaschine (10) und zumindest eine App (30) zur Bereitstellung von Zusatzfunktionalitäten für die Produktions- oder Werkzeugmaschine (10) umfasst, wobei die App (30) während des Betriebs der Produktions- oder Werkzeugmaschine (10) durch ein externes App-Managementsystem (40) verwaltet wird, wird erfindungsgemäß bei Vorliegen eines vordefinierten Betriebszustandes der Produktions- oder Werkzeugmaschine (10) eine Verwaltungsmaßnahme des App-Managementsystems (40) in Bezug auf die App (30) verhindert. Hierdurch kann ein fehlerfreier Betrieb der Produktions- oder Werkzeugmaschine (10) gewährleistet werden.

## Beschreibung

Die Erfindung betrifft ein Verfahren zum Betrieb einer Produktions- oder Werkzeugmaschine gemäß Patentanspruch 1 und eine Produktions- oder Werkzeugmaschine gemäß Patentanspruch 13. Die Erfindung betrifft weiterhin ein Computerprogramm gemäß Patentanspruch 14 sowie ein computerlesbares Speichermedium gemäß Patentanspruch 15.

Produktions- und Werkzeugmaschinen sind an sich bekannt und umfassen in der Regel einen oder mehrere Aktoren, die von einer Steuerung ausgegebene elektrische Steuersignale in mechanische Bewegungen bzw. Veränderungen physikalischer Größen wie Druck oder Temperatur umsetzen und damit aktiv in einen gesteuerten Prozess eingreifen. Beispielsweise kann es sich bei einem Aktor um einen Antrieb oder ein Heizelement handeln.

Bei der Produktionsmaschine kann es sich um eine Maschine aus der diskreten Fertigungsindustrie (z.B. eine Maschine zur Herstellung von Fahrzeugkomponenten), der Prozessindustrie (z.B. eine Maschine zur Erzeugung eines pharmazeutischen Produktes), der Nahrungs- und Genussmittelindustrie oder der Energieerzeugung (z.B. Windrad, Solaranlage) handeln. Im Falle einer Werkzeugmaschine umfassen die Aktoren zum Beispiel einen oder mehrere Antriebe (Vorschubantriebe) zur Positionierung eines Werkzeugs. Solche Maschinen sind jeweils ein komplexer Zusammenschluss verschiedener logischer und physischer Komponenten (z.B. Antriebe, Achsen etc.) mit diversiterer Multiplizität. Üblicherweise umfassen derartige Maschinen eine Steuerung (z.B. eine numerische Steuerung) zur Steuerung der Aktoren.

Im Rahmen von Industry 4.0 und dem sogenannten Internet der Dinge (Internet of Things; IoT) besteht eine Möglichkeit, ei-ne spezifische Funktion einer solchen Maschine mittels so genannter Apps um weitere Funktionen oder Mikroservices zu erweitern. Solche Apps stehen beispielsweise in einer so genannten Cloud zum Herunterladen zur Verfügung und werden dafür dort von einer Cloud-Plattform (AppStore) bereitgestellt. Das Herunterladen einer App von einer Cloud-Plattform und die Installation der heruntergeladenen App auf einem Zielsystem (Hostsystem), hier einer Produktions- oder Werkzeugmaschine, wird als Deployment bezeichnet.

Eine Produktions- oder Werkzeugmaschine mit einer derartig aus einer Cloud heruntergeladenen App, auch einer App mit einer in einem Container gekapselten Funktionalität, ist für sich genommen bekannt, zum Beispiel aus der EP 3 650 968 A1.

Eine App kann in einem AppStore für generische Maschinen angeboten werden. Dabei sind ein jeweiliger spezieller Aufbau eines späteren Hostsystems und eine Laufzeitumgebung des Hostsystems nicht bekannt und diese Kenntnis ist auch nicht erforderlich. Zu diesem Zwecke kann die App zumindest einen bei der sogenannten Containervirtualisierung verwendeten virtuellen Container (im Folgenden kurz als Container bezeichnet) umfassen und in den oder jeden von der App umfassten Container ist eine zu der App gehörige Softwarefunktionalität eingebettet. Der oder jeder Container umfasst zumindest eine zur Ausführung der jeweils eingebetteten Softwarefunktionalität notwendige Laufzeitumgebung (Runtime Environment). Die von dem Container umfasste Laufzeitumgebung ermöglicht die Ausführung der jeweiligen Softwarefunktionalität unabhängig vom Hostsystem und dessen Laufzeitumgebung. Eine auf ein Hostsystem geladene App wird auf dem Hostsystem durch das Starten des oder jedes davon umfassten Containers gestartet und ist auf den oder jeden von der App umfassten virtuellen Container begrenzt. Solche Container sind an sich bekannt und insoweit kann zum Beispiel auf die unter der Bezeichnung "Docker" bekannte Software zur sogenannten Containervirtualisierung verwiesen werden. Ein anderes Bespiel ist "LXC" (Linux Containers).

Die durch die Apps bereitgestellten (meist optionalen) Zusatzfunktionalitäten für die Maschine können dabei beispielsweise eine Erfassung und Analyse von Betriebsdaten der Maschine betreffen. Es können aber auch sicherheitsrelevante Funktionen wie z.B. eine Kollisionsüberwachung für Werkzeuge oder Roboterarme, oder funktionale Erweiterungen für Produktionszyklen (z.B. eine Berechnung komplizierter Verfahrprogramme) ermöglicht werden.

Die Erweiterung einer Maschine um solche Apps erfolgt häufig mit Hilfe eines sogenannten "Edge Systems", welches entweder bei Herstellung der Maschine bereits in die Maschine integriert oder später nachgerüstet wird.

Der Ablaufprozess derartiger Apps läuft dabei üblicherweise auf einer von der Steuerung der Aktoren unterschiedlichen und zeitlich nicht synchronisierten Hardware, ist also extern von der Steuerung und ist beispielsweise auch nicht in einen Echtzeit-Kommunikationsbus von Maschinenkomponenten eingebunden.

Die Apps bzw. diese Edge Systeme werden jedoch üblicherweise nicht von der Maschine, sondern von einem "externen" App-Managementsystem verwaltet, das oftmals auch von der Maschine räumlich entfernt ist (z.B. in einer Cloud). Verwaltungsmaßnahmen des externen App-Managementsystem in Bezug auf eine App können beispielsweise ein Starten der App, ein Beenden der App, ein Update der App, eine Konfigurationsänderung der App und/oder eine Deinstallation der App sein.

"Extern" bedeutet in diesem Zusammenhang für das App-Managementsystem, dass das App-Managementsystem unabhängig von der Steuerung der Maschine läuft und die Apps verwaltet, beispielsweise aufgrund von Vorgaben (Befehlen) eines Bedieners oder Entwicklers der App bzw. des App-Managementsystems.

Das App-Managementsystem kann auch lokal auf dem Edge-System laufen (beispielsweise ein UI einer App), wird dann aber trotzdem als extern zur Maschine angesehen.

Ausgehend hiervon ist es Aufgabe vorliegender Erfindung, einen fehlerfreien Betrieb einer derartigen Produktions- oder Werkzeugmaschine zu gewährleisten, insbesondere eine hohe Betriebssicherheit zu gewährleisten und Betriebsstörungen und Produktionsfehler zu vermeiden.

Die Lösung dieser Aufgabe gelingt durch ein Verfahren zum Betrieb einer Produktions- oder Werkzeugmaschine gemäß Patentanspruch 1, eine Produktions- oder Werkzeugmaschine gemäß Patentanspruch 13, ein Computerprogramm gemäß Patentanspruch 14 sowie ein computerlesbares Speichermedium gemäß Patentanspruch 15. Vorteilhafte Ausgestaltungen sind jeweils Gegenstand der Unteransprüche.

Das erfindungsgemäße Verfahren dient zum Betrieb einer Produktions- oder Werkzeugmaschine, die eine Steuerung zur Steuerung von Aktoren der Produktions- oder Werkzeugmaschine und zumindest eine App zur Bereitstellung von (üblicherweise optionalen) Zusatzfunktionalitäten für die Produktions- oder Werkzeugmaschine umfasst. Die App wird während des Betriebs der Maschine durch ein externes, insbesondere von der Maschine räumlich entferntes, App-Managementsystem verwaltet. Mit anderen Worten erfolgt die Verwaltung der App unabhängig von der Steuerung (bzw. einem Steuerprogramm) der Produktions- oder Werkzeugmaschine.

Erfindungsgemäß wird bei Vorliegen eines vordefinierten Betriebszustandes der Maschine eine Verwaltungsmaßnahme des App-Managementsystems in Bezug auf die App verhindert. Die App wird bei dem vordefinierten Betriebszustandes somit gegen eine Verwaltungsmaßnahme des App-Managementsystems in Bezug auf die App gesperrt.

Während des vordefinierten Betriebszustandes werden folglich keine Verwaltungsmaßnahmen in Bezug auf die App ausgeführt. Funktionalitäten der Maschine, die durch die App bereitgestellt werden, können somit nicht beeinträchtigt oder sogar deaktiviert werden. Beispielsweise kann ein Bediener des App-Managementsystems keine Aufträge auslösen, welche die Funktion der App deaktivieren oder die App in ihrer Funktionalität verändern. Hierdurch können vordefinierte Betriebszustände der Maschine vor einem Einfluss durch das externe App-Managementsystem geschützt werden. Im Ergebnis kann somit ein fehlerfreier Betrieb der Maschine gewährleistet werden. Es kann eine hohe Betriebssicherheit der Maschine erzielt werden und es können Betriebsstörungen und Produktionsfehler vermieden werden.

Der vordefinierte Betriebszustand ist deshalb vorzugsweise ein für einen sicheren Betrieb und/oder einen Produktionserfolg (z.B. hinsichtlich Produktqualität, Produktionsmenge) der Maschine relevanter (z.B. kritischer) Zustand. Es sind aber auch andere vordefinierte Betriebszustände denkbar, wie z.B. ein Betriebszustand mit einem geringen Energieverbrauch, mit einem geringen Rohstoffverbrauch, mit geringen Emissionen etc.

Die Verhinderung von bzw. das Sperren der App gegen Verwaltungsmaßnahmen erfolgt dabei von Vorteil direkt intern in der Maschine. Alternativ kann es aber auch nach einer entsprechenden Information an das externe App-Managementsystem direkt durch das App-Managementsystem erfolgen.

Die Steuerung bzw. ein zugehöriges Steuerprogramm und/oder die App kann sich örtlich in oder an der Maschine befinden. Beispielsweise kann die App in einem sogenannten Edge System gespeichert sein und zur Ausführung gebracht werden. Es ist aber auch möglich, dass Teile der Steuerung bzw. des Steuerprogrammes und/oder die App auf verteilten Speicher- und Rechnerstrukturen (z.B. einer Cloud-Plattform) gespeichert sind und darin ausgeführt werden. In letztem Fall werden diese jedoch der Maschine zugerechnet, d.h. als interne Komponenten der Maschine angesehen.

Ein Ablaufprozess der Apps und ein Ablaufprozess des App-Managementsystems läuft dabei vorzugsweise auf einer von der Steuerung der Aktoren unterschiedlichen und zeitlich nicht synchronisierten Hardware, ist also extern von der Steuerung, und ist beispielsweise auch nicht in ein Kommunikationssystem zur Echtzeit-Kommunikation der Steuerung mit anderen Komponenten der Maschine (z.B. Aktoren, Sensoren) eingebunden.

Das Verhindern der Verwaltungsmaßnahme kann dann so lange erfolgen, wie der vordefinierte Betriebszustand vorliegt (ggf. mit einer definierten Nachlaufzeit). Wenn der vordefinierte Betriebszustand nicht mehr vorliegt, kann dann automatisch eine Freigabe zur Umsetzung von Verwaltungsmaßnahmen erfolgen.

Bei den Verwaltungsmaßnahmen kann es sich beispielsweise um ein Starten der App, ein Beenden der App, ein Update der App, eine Konfigurationsänderung der App und/oder eine Deinstallation der App handeln. Insofern handelt es sich bei den Verwaltungsmaßnahmen um "technische" Verwaltungsmaßnahmen.

Die durch die App bereitgestellten (meist optionalen) Zusatzfunktionalitäten für die Maschine können dabei beispielsweise eine Erfassung und Analyse von Betriebsdaten der Maschine zur Maschinendiagnose und/oder Qualitätsüberwachung betreffen. Es können aber auch sicherheitsrelevante Funktionen, wie z.B. eine Kollisionsüberwachung für Werkzeuge oder Roboterarme mit Hilfe von Vorberechnungen und Simulationen von Bewegungen, oder Erweiterungen von Maschinenfunktionen (z.B. eine Berechnung komplizierter Verfahrprogramme) ermöglicht werden.

Für eine besonders hohe Fehlerfreiheit des Maschinenbetriebs wird die Maschine vorzugsweise kontinuierlich auf das Vorliegen des vordefinierten Betriebszustandes überwacht, beispielsweise durch die Steuerung bzw. ein zugehöriges Steuerprogramm.

Alternativ oder ergänzend kann die Steuerung bzw. ein zugehöriges Steuerprogramm auch zumindest eine Funktionalität umfassen, bei deren Ausführung (automatisch) der vordefinierte Betriebszustand vorliegt.

Gemäß einer vorteilhaften Ausgestaltung umfasst die Produktions- oder Werkzeugmaschine eine interne (lokale) App-Verwaltungseinheit, die durch das externe App-Managementsystem gesteuert wird und die Vorgaben des App-Managementsystems zu Verwaltungsmaßnahmen in Bezug auf die App umsetzt, und wobei die App-Verwaltungseinheit bei Vorliegen des vordefinierten Betriebszustandes die Vorgaben des App-Managementsystems zu Verwaltungsmaßnahmen in Bezug auf die App nicht umsetzt.

Die App-Verwaltungseinheit stellt hierzu von Vorteil eine Funktion bereit (im Folgenden als "Betriebsstatus-Funktion" bezeichnet), bei deren Aufruf sie die Vorgaben des externen App-Managementsystems zu Verwaltungsmaßnahmen in Bezug auf die App nicht umsetzt.

Gemäß einer weiteren vorteilhaften Ausgestaltung umfasst die Produktions- oder Werkzeugmaschine ein Edge-System und die App ist in dem Edge-System gespeichert und wird darin ausgeführt.

Das externe App-Managementsystem verwaltet dann von Vorteil das gesamte Edge-System, wobei bei Vorliegen des vordefinierten Betriebszustandes der Maschine eine Verwaltungsmaßnahme des App-Managementsystems in Bezug auf das Edge-System verhindert wird.

Bei der Verwaltungsmaßnahme kann es sich, neben den bereits erläuterten Verwaltungsmaßnahmen in Bezug auf eine in dem Edge-System installierte App, zusätzlich beispielsweise auch um eine Installation einer App in dem Edge-System, ein Update einer Firmware des Edge-Systems, eine Konfiguration der Firmware oder eine Konfiguration von Netzwerkeinstellungen des Edge-Systems handeln.

Das Edge-System läuft dabei vorzugsweise unabhängig von und zeitlich nicht synchronisiert mit der Steuerung, ist also extern von der Steuerung, und ist beispielsweise auch nicht in ein Kommunikationssystem zur Echtzeit-Kommunikation der Steuerung mit anderen Komponenten der Maschine (z.B. Aktoren, Sensoren) eingebunden.

Die App kann dabei in an sich bekannter Weise in Containertechnologie ausgeführt sein, d.h. zumindest einen virtuellen Container mit einer darin gekapselten Softwarefunktionalität, welche die Funktion der App bestimmt, umfassen.

Gemäß einer weiteren vorteilhaften Ausgestaltung ermittelt die App kontinuierlich, ob der vordefinierte Betriebszustand vorliegt. Dies kann beispielsweise durch eine Abfrage bei der vorstehend erläuterten Betriebsstatus-Funktion der lokalen App-Verwaltungseinheit erfolgen. Die App kann dann den Betriebsstatus für eine ihr zugeordnete grafische Benutzerschnittstelle verwenden (z.B. zur Anzeige bringen).

Wenn der vordefinierte Betriebszustand nicht mehr vorliegt, kann durch die Betriebsstatus-Funktion automatisch eine Freigabe zur Umsetzung von Verwaltungsmaßnahmen erfolgen. Alternativ kann - nach entsprechender Aufforderung - die Freigabe durch einen Bediener der App bzw. des App-Managementsystems erfolgen.

Für den Fall, dass es aufgrund fehlerhafter Umstände (z.B. vergessene Freigabe, Ablaufprobleme, Programmierfehler) nach Ablauf des vordefinierten Betriebszustandes zu keiner Freigabe für eine Umsetzung von Verwaltungsmaßnahmen gekommen ist, kann vorgesehen sein, dass nach einem Empfang eines Freigabebefehles von einem Bediener des externen App-Managementsystems die Verhinderung von Verwaltungsmaßnahmen des externen App-Managementsystems beendet wird. Einem Bediener des externen App-Managementsystems kann somit (vorzugs-weise nach vorheriger Prüfung) ermöglicht werden, manuell ei-ne Umsetzung von Verwaltungsmaßnahmen zu erzwingen.

Eine erfindungsgemäße Produktions- oder Werkzeugmaschine umfasst eine Steuerung zur Steuerung von Aktoren der Produktions- oder Werkzeugmaschine und einen Speicher mit zumindest einer darin gespeicherten App zur Bereitstellung von Zusatzfunktionalitäten für die Produktions- oder Werkzeugmaschine, wobei die Maschine eine Schnittstelle zu einem externen App-Managementsystem aufweist, über die die App während des Betriebs der Maschine durch das App-Managementsystem verwaltbar ist. Die Maschine ist hierbei ausgebildet, bei Vorliegen eines vordefinierten Betriebszustandes der Maschine eine Verwaltungsmaßnahme des App-Managementsystems in Bezug auf die App zu verhindern.

Die für das erfindungsgemäße Verfahren genannten Vorteile gelten entsprechend für die erfindungsgemäße Produktions- oder Werkzeugmaschine.

Ein erfindungsgemäßes Computerprogramm umfasst Befehle, die bei der Ausführung des Programms durch eine Produktions- oder Werkzeugmaschine diese veranlassen, das vorstehend erläuterte Verfahren auszuführen.

Ein erfindungsgemäßes computerlesbares Speichermedium umfasst Befehle, die bei der Ausführung durch eine Produktions- oder Werkzeugmaschine diese veranlassen, das vorstehend erläuterte Verfahren auszuführen.

Die Erfindung sowie weitere vorteilhafte Ausgestaltungen der Erfindung gemäß Merkmalen der Unteransprüche werden im Folgenden anhand von Ausführungsbeispielen in den Figuren näher erläutert; darin zeigen:
- FIG 1: eine Produktions- oder Werkzeugmaschine mit Apps, die in einem Speicher der Produktions- oder Werkzeugmaschine gespeichert sind,
- FIG 2: Einzelheiten einer App von FIG 1.

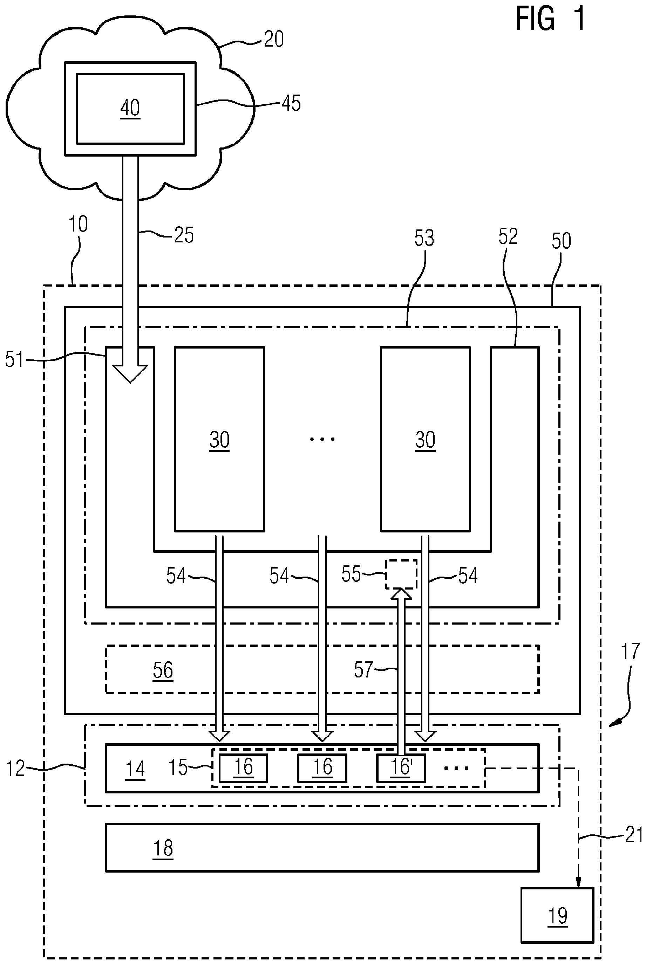

Die Darstellung in Figur 1 zeigt in schematisch stark vereinfachter Form eine im Folgenden oftmals kurz nur als Maschine 10 bezeichnete Produktions- oder Werkzeugmaschine 10 der eingangs genannten Art. Mechanische Einzelheiten der Maschine 10, also zum Beispiel Achsen oder dergleichen, sind nicht gezeigt. Die Darstellung ist vielmehr im Wesentlich auf eine Darstellung eines von der Maschine 10 umfassten Speichers 12, nämlich eines Speichers 12 zum Speichern von Daten, beschränkt.

In den Speicher 12 ist in grundsätzlich an sich bekannter Art und Weise eine sogenannte Laufzeitumgebung 14 (Runtime Environment oder kurz Runtime) der Maschine 10 geladen. Diese bestimmt die Grundfunktionalität der Maschine 10 und hängt von deren Konfiguration ab. Bei einer Maschine 10 in Form einer Werkzeugmaschine mit genau zwei Vorschubachsen umfasst die Laufzeitumgebung 14 zum Beispiel ein Steuerprogramm bzw. Steuerungssoftware 15, welche mehrere in Software implementierte Module oder Funktionseinheiten 16, 16` zur Ansteuerung von Antrieben dieser Achsen umfasst, zum Beispiel zur lagegeregelten, geschwindigkeitsgeregelten und/oder beschleunigungsgeregelten Achsansteuerung. Beispielhaft ist in FIG 1 ein Antrieb 19 dargestellt. Die Ansteuerung durch das Steuerprogramm 15 ist durch einen Pfeil 21 symbolisiert.

Zur Ausführung der Laufzeitumgebung 14 und der davon umfassten Software-Funktionseinheiten 16 umfasst die Maschine 10 zumindest eine Verarbeitungseinheit 18 in Form von oder nach Art eines Mikroprozessors.

Die Verarbeitungseinheit 18 und die Software-Funktionseinheiten 16, 16` bilden somit eine Steuerung 17 der Maschine 10. Bei der Software-Funktionseinheit 16` handelt es sich dabei um eine für einen fehlerfreien Betrieb kritische Funktionseinheit. Die Steuerung 17 ist dabei über einen nicht näher dargestellten Echtzeit-Kommunikationsbus (z.B. PROFINET) mit verschiedenen Maschinenkomponenten wie z.B. Sensoren und Aktoren (z.B. dem Aktor 19) verbunden.

Die Funktionalität der Laufzeitumgebung 14 liegt zum Auslieferungszeitpunkt der jeweiligen Maschine 10 fest. Grundsätzlich kann die Funktionalität der Laufzeitumgebung 14 durch ein Update oder Upgrade der Laufzeitumgebung 14 geändert oder erweitert werden.

Außerdem ist die Maschine 10 durch Apps 30 um zusätzliche optionale Funktionalitäten erweitert worden. Die Grundfunktionalität der Maschine 10 blieb dabei unangetastet.

Derartige Apps 30 sind entweder bei Auslieferung der Maschine bereits installiert oder wurden nachträglich nach erfolgter Inbetriebnahme noch installiert.

Die Apps 30 sind dabei in einem Speicher 53 eines sogenannten Edge-Systems 50 gespeichert. Das Edge-System 50 ist von der Maschine 10 umfasst oder mit der Maschine 10 zumindest kommunikativ verbunden. Insoweit gehört das Edge-System 50 zu der Maschine 10.

Grundsätzlich ist es aber auch möglich, dass Teile der Steuerung 17 bzw. des Steuerprogrammes 15 und/oder die Apps 30 auf verteilten Speicher- und Rechnerstrukturen (z.B. einer Cloud-Plattform) gespeichert sind und dort zur Ausführung gebracht werden. In letztem Fall werden diese jedoch der Maschine 10 zugerechnet, d.h. als interne Komponenten der Maschine 10 angesehen.

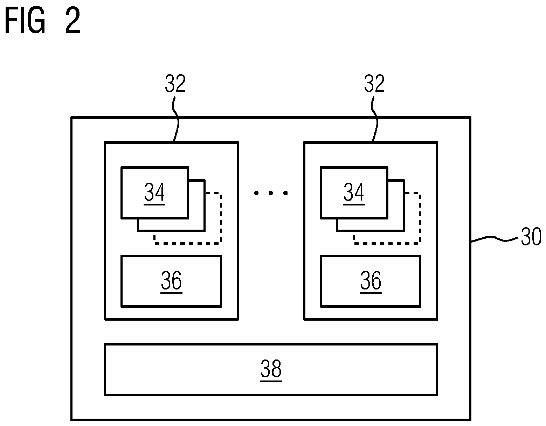

Die Darstellung in FIG 2 zeigt in schematisch vereinfachter Form eine einzelne App 30. Damit eine beispielsweise in einem AppStore verfügbare App 30 auf grundsätzlich beliebigen Maschinen 10 ausgeführt werden kann, umfasst die App 30 zumindest einen sogenannten virtuellen Container 32 oder mehre-re virtuelle Container 32. Ein solcher Container 32 ist das Basisobjekt der sogenannten Containervirtualisierung. Das Konzept der Containervirtualisierung sowie die Verwendung virtueller Container sind an sich bekannt. Weitere Erläuterungen zur Containervirtualisierung und zu virtuellen Containern sind daher hier nicht erforderlich und es wird auf die entsprechende Fachliteratur verwiesen.

Ein Container 32 umfasst in grundsätzlich an sich bekannter Art und Weise zumindest eine zu der App 30 gehörige Software-funktionalität 34 (FIG 2) und eine Laufzeitumgebung (Containerlaufzeitumgebung 36; FIG 2) für die oder jede von dem Container 32 umfasste Softwarefunktionalität 34. Die Software-funktionalität 34 oder die Gesamtheit der von der App 30 in einem Container 32 oder mehreren Containern 32 umfassten Softwarefunktionalitäten 34 bestimmt die Funktionalität der App 30. Zu der App 30 gehört eine Konfiguration (AppKonfiguration 38), welche Konfigurationsinformationen (Containerschnittstelle) für zumindest einen oder den oder jeden zu der App 30 gehörigen Container 32 umfasst. Eine Containerschnittstelle bildet die Namen von innerhalb des Containers 32 verwendeten Geräten, Ressourcen und dergleichen auf einen außerhalb des Containers 32 verwendbaren Namen für das jeweilige Gerät, die jeweilige Ressource usw. ab. Damit kann innerhalb des Containers 32 zum Beispiel zum Zugriff auf ein (virtuelles oder reales) Netzwerk ein Name für dieses Netzwerk verwendet werden, ohne dass bereits bekannt ist, wie das Netzwerk auf einem Hostsystem, also zum Beispiel einer Maschine 10, auf welche die diesen Container 32 umfassende App 30 heruntergeladen wird, benannt ist. Die Containerschnittstelle gewährleistet in grundsätzlich an sich bekannter Art und Weise die Entkopplung des Containers 32 von den Geräten, Ressourcen und dergleichen eines zum Entwicklungszeitpunkt des Containers 32 einerseits unbekannten und andererseits grundsätzlich beliebigen Hostsystems. Die zu einer heruntergeladenen App 30 gehörige AppKonfiguration 38 ist die Gesamtheit aller Containerschnittstellen der von der App 30 umfassten Container 32. Die AppKonfiguration 38 und deren Konfigurationsinformationen wird bzw. werden beispielsweise nach dem in der EP 3 650 968 A1 vorgeschlagenen Ansatz automatisch ausgewertet und ggf. modifiziert, um Konflikte mit anderen Apps zu verhindern.

In der schematisch extrem vereinfachten Darstellung in FIG 1 ist das Edge-System 50 als Block innerhalb der selbst nur als Block gezeigten Maschine 10 dargestellt.

Das Edge-System 50 umfasst in grundsätzlich an sich bekannter Art und Weise eine eigene Verarbeitungseinheit 56 in Form von oder nach Art eines Mikroprozessors.

Der Ablaufprozess der Apps 30 läuft somit auf einer von der Steuerung 17 unterschiedlichen und zeitlich nicht synchronisierten Hardware, ist also extern von der Steuerung 17 und ist beispielsweise auch nicht in einen Echtzeit-Kommunikationsbus der Maschinenkomponenten eingebunden.

Ein externes App-Managementsystem 40 dient zur Verwaltung des Edge-Systems 50, und insbesondere zur Verwaltung der darin gespeicherten Apps 30. "Extern" bedeutet in diesem Zusammenhang, dass das App-Managementsystem 40 unabhängig von der Steuerung 17 bzw. dem Steuerprogramm 15 läuft und das Edge-System 50, und hierbei insbesondere die Apps 30, verwaltet.

Das externe App-Managementsystem 40 ist ein Computerprogramm, das in einen Speicher 45 eines beispielsweise in einer Cloud 20 erreichbaren Computers oder Computersystems, ggf. auch in einen verteilten Speicher 45 eines verteilten Computersystems, geladen ist.

Auch der Ablaufprozess des App-Managementsystems 40 läuft somit auf einer von der Steuerung 17 unterschiedlichen und zeitlich nicht synchronisierten Hardware.

Das externe App-Managementsystem 40 verwaltet das Edge-System 50, insbesondere die Apps 30, durch verschiedene Verwaltungsmaßnahmen: In Bezug auf die Apps 30 kann eine Verwaltungsmaßnahme beispielsweise ein Starten der App, ein Beenden der App, eine Konfigurationsänderung der App oder eine Deinstallation der App sein. In Bezug auf das Edge-System 50 kann ei-ne Verwaltungsmaßnahme beispielsweise eine Installation einer App in dem Edge-System 50, ein Update einer Firmware des Edge-Systems 50, eine Konfiguration der Firmware oder ei-ne Konfiguration von Netzwerkeinstellungen des Edge-Systems 50 sein.

Zur Umsetzung von Verwaltungsmaßnahmen in der Produktions- oder Werkzeugmaschine 10 umfasst diese eine interne (lokale) App-Schnittstellen- und App-Verwaltungseinheit, im Folgenden kurz als App-Verwaltungseinheit 52 bezeichnet. Die App-Verwaltungseinheit 52 wird durch das externe App-Managementsystem 40 gesteuert (symbolisiert durch einen Pfeil 25) und setzt die Vorgaben des externen App-Managementsystems 40 zu Verwaltungsmaßnahmen in Bezug auf das Edge-System 50, und insbesondere die Apps 30, um. Die App-Verwaltungseinheit 52 umfasst hierzu eine Schnittstelle 51 zur Kommunikation mit dem App-Managementsystem 40.

Die Verwaltungseinheit 52 ist als Computerprogramm oder als Computerprogrammmodul (ggf. als verteiltes Computerprogramm, Computerprogrammmodul) implementiert und in den Speicher 53 des Edge-Systems 50 geladen.

Erfindungsgemäß wird bei Vorliegen eines vordefinierten Betriebszustandes der Maschine 10 eine Verwaltungsmaßnahme des App-Managementsystems 40 in Bezug auf das Edge-System 50 mit den Apps 30 verhindert. Das Edge-System 50 mit den Apps 30 wird bei dem vordefinierten Betriebszustandes somit gegen ei-ne Verwaltungsmaßnahme des App-Managementsystems 40 gesperrt.

Der vordefinierte Betriebszustand ist dabei ein für einen sicheren Betrieb und/oder einen Produktionserfolg (z.B. in Bezug auf Produktqualität, Produktionsmenge) der Maschine relevanter (z.B. kritischer) Zustand. Es sind aber auch andere vordefinierte Betriebszustände denkbar, wie z.B. ein Betriebszustand mit einem geringen Energieverbrauch, mit einem geringen Rohstoffverbrauch, mit geringen Emissionen etc.

Während des vordefinierten Betriebszustandes werden folglich keine Verwaltungsmaßnahmen in Bezug auf das Edge-System 50 mit den Apps 30 ausgeführt. Funktionalitäten der Maschine 10, die durch die Apps 30 bereitgestellt werden, können somit nicht beeinträchtigt oder sogar deaktiviert werden. Hierdurch können vordefinierte Betriebszustände der Maschine 10 vor einem Einfluss durch das externe App-Managementsystem 40 geschützt werden. Im Ergebnis kann somit die Fehlerfreiheit des Betriebs der Maschine 10 erhöht werden.

Die App-Verwaltungseinheit 52 stellt hierzu eine speziell Funktion 55 bereit (im Folgenden als "Betriebsstatus-Funktion 55" bezeichnet), bei deren Aufruf die App-Verwaltungseinheit 52 die Vorgaben des externen App-Managementsystems 40 zu Verwaltungsmaßnahmen in Bezug auf die Apps 30 nicht umsetzt.

Das Verhindern der Verwaltungsmaßnahmen durch die Betriebsstatus-Funktion 55 kann dann so lange erfolgen, wie der vordefinierte Betriebszustand vorliegt (ggf. mit einer definierten Nachlaufzeit). Wenn der vordefinierte Betriebszustand nicht mehr vorliegt, kann dann automatisch eine Freigabe zur Umsetzung von Verwaltungsmaßnahmen erfolgen.

Die Maschine wird dabei durch die Steuerung 17 bzw. das Steuerprogramm 15 während des Betriebes kontinuierlich auf das Vorliegen des vordefinierten Betriebszustandes überwacht. Dies erfolgt beispielsweise durch eine Auswertung von Signalen von nicht näher dargestellten Sensoren der Maschine 10, einer Auswertung der in der Steuerung 17 bzw. dem Steuerprogramm 15 aktiven Funktionen und/oder einer Auswertung von Vorgaben eines übergeordneten Steuerungssystems wie z.B. eines MES-Systems oder eines Prozess-Leitsystems.

Außerdem liegt automatisch der vordefinierte Betriebszustand vor, wenn die Softwarefunktionalität 16` zur Ausführung gebracht wird.

In beiden Fällen ruft die Steuerung 17 bzw. das Steuerprogramm 15 bei Vorliegen des vordefinierten Betriebszustandes die Betriebsstatus-Funktion 55 auf und verhindert somit die Verwaltungsmaßnahmen. Beispielsweise ruft in FIG 1 die Software-Funktionalität 16` die Betriebsstatus-Funktion 55 auf, veranschaulicht durch den Pfeil 57.

Auch die Apps 30 ermitteln dabei kontinuierlich, ob der vordefinierte Betriebszustand vorliegt. Dies erfolgt durch eine Abfrage bei der vorstehend erläuterten Betriebsstatus-Funktion 55. Die Apps 30 können dann den Betriebsstatus für eine ihnen jeweils zugeordnete grafische Benutzerschnittstelle verwenden (z.B. zur Anzeige bringen).

Wenn der vordefinierte Betriebszustand nicht mehr vorliegt (beispielsweise die Software-Funktionalität 16' nicht mehr ausgeführt wird), teilt die Steuerung 17 bzw. das Steuerprogramm 15 dies der Betriebsstatus-Funktion 55 ebenfalls durch einen entsprechenden Aufruf mit. Durch die Betriebsstatus-Funktion 55 erfolgt hierdurch dann automatisch eine Freigabe (bzw. ein "Entsperren") einer Umsetzung von Verwaltungsmaßnahmen. Alternativ kann - nach entsprechender Aufforderung - die Freigabe auch durch einen Bediener der Apps 30 bzw. des App-Managementsystems 40 erfolgen.

Für den Fall, dass es aufgrund fehlerhafter Umstände (z.B. vergessene Freigabe, Ablaufprobleme, Programmierfehler) nach Ablauf des vordefinierten Betriebszustandes zu keiner Freigabe für eine Umsetzung von Verwaltungsmaßnahmen gekommen ist, wird einem Bediener des externen App-Managementsystems 40 ermöglicht (vorzugsweise nach vorheriger Prüfung), manuell eine Umsetzung von Verwaltungsmaßnahmen zu erzwingen. Hierzu kann der Bediener einen Freigabebefehl erteilen und über die Schnittstelle 51 an die interne App-Verwaltungseinheit 52 kommunizieren. Nach einem Empfang eines derartigen Freigabebefehles beendet die interne App-Verwaltungseinheit 52 die Verhinderung von Verwaltungsmaßnahmen des externen App-Managementsystems 40.

Das App-Managementsystem 40 kann dabei auch in nicht näher dargestellter Weise eine App-Store umfassen oder mit einem derartige App-Store kommunikativ verbunden sein. Das Herunterladen einer App 30 erfolgt dann durch das Herunterladen der App 30 zusammen mit dem oder jedem von der App 30 umfassten Container 32 sowie der von der App 30 umfassten AppKonfiguration 38 von dem App-Managementsystem 40 in das Edge-System 50. Die automatische Auswertung der AppKonfiguration 38 beim Deployment erfolgt ebenfalls mittels der Verwaltungseinheit 52. Die Verwaltungseinheit 52 stellt definierte Schnittstellen 54 für heruntergeladene bzw. gespeicherte Apps 30 Verfügung. Solche Schnittstellen 54 sind in der Darstellung in FIG 1 schematisch vereinfacht als "Kanäle" durch die Verwaltungseinheit 52 gezeigt. Die Schnittstellen 54 können beispielsweise durch spezielle "Adapter"-Applikationen des Edge-Systems 50 realisiert werden (z.B. für S7 Protokoll, OPC-OA Protokoll, HMI Services (OMS+ + S7)).

Der Zugriff auf die Laufzeitumgebung 14 der Maschine 10 und von der Maschine 10 umfasste oder zu der Maschine 10 gehörige Geräte und Ressourcen ist nur über die Verwaltungseinheit 52 und die dort definierten Schnittstellen 54 möglich. Insoweit fungiert die Verwaltungseinheit 52 als Schnittstelle zur Maschine 10 und als Sicherheitsschicht (Security Layer) zwischen einer heruntergeladenen App 30 und der Maschine 10. Nur die Verwaltungseinheit 52 startet eine heruntergeladene App 30 und den oder jeden davon umfassten Container 32 (wiederum gesteuert durch das App-Managementsystem 40). Soweit heruntergeladene Apps 30 je-weils zur Ausführung zumindest einer IoT-Funktion bestimmt sind, ermöglicht die Verwaltungseinheit 52 die Ergänzung der Funktionalität der Maschine 10 um IoT-Funktionen und die Verwaltungseinheit 52 fungiert als Plattform für maschinenspezifische IoT-Erweiterungen.

## Patentansprüche

1. Verfahren zum Betrieb einer Produktions- oder Werkzeugmaschine (10), die eine Steuerung (17) zur Steuerung von Aktoren (19) der Produktions- oder Werkzeugmaschine (10) und zumindest eine App (30) zur Bereitstellung von Zusatzfunktionalitäten für die Produktions- oder Werkzeugmaschine (10) umfasst, wobei die App (30) während des Betriebs der Produktions- oder Werkzeugmaschine (10) durch ein externes App-Managementsystem (40) verwaltet wird,
**dadurch gekennzeichnet, dass** bei Vorliegen eines vordefinierten Betriebszustandes der Produktions- oder Werkzeugmaschine (10) eine Verwaltungsmaßnahme des App-Managementsystems (40) in Bezug auf die App (30) verhindert wird.

2. Verfahren nach Anspruch 1, wobei die Verwaltungsmaßnahme ein Starten der App, ein Beenden der App, ein Update der App (30), eine Konfigurationsänderung der App (30) und/oder eine Deinstallation der App (30) ist.

3. Verfahren nach einem der vorhergehenden Ansprüche, wobei der vordefinierte Betriebszustand ein für einen sicheren Betrieb und/oder für einen Produktionserfolg der Produktions- oder Werkzeugmaschine (10) relevanter Zustand ist.

4. Verfahren nach einem der vorhergehenden Ansprüche, wobei die Produktions- oder Werkzeugmaschine (10) auf das Vorliegen des vordefinierten Betriebszustandes überwacht wird.

5. Verfahren nach einem der vorhergehenden Ansprüche, wobei die Steuerung eine Funktionalität (16`) umfasst, bei deren Ausführung der vordefinierte Betriebszustand vorliegt.

6. Verfahren nach einem der vorhergehenden Ansprüche, wobei die Produktions- oder Werkzeugmaschine (10) eine interne App-Verwaltungseinheit (52) umfasst, die durch das externe App-Managementsystem (40) gesteuert wird und die Vorgaben des App-Managementsystems (40) zu Verwaltungsmaßnahmen in Bezug auf die App (30) umsetzt, und wobei die App-Verwaltungseinheit (52) bei Vorliegen des vordefinierten Betriebszustandes die Vorgaben des App-Managementsystems (40) in Bezug auf die App (30) nicht umsetzt.

7. Verfahren nach Anspruch 6, wobei die App-Verwaltungseinheit (52) eine Funktion (55) bereitstellt, bei deren Aufruf sie die Vorgaben des externen App-Managementsystems (40) zu Verwaltungsmaßnahmen in Bezug auf die App (30) nicht umsetzt.

8. Verfahren nach einem der vorhergehenden Ansprüche, wobei die Produktions- oder Werkzeugmaschine (10) ein Edge-System (50) umfasst und wobei die App (30) in dem Edge-System (50) gespeichert ist und ausgeführt wird.

9. Verfahren nach Anspruch 8, wobei das externe App-Managementsystem (40) das Edge-System (50) verwaltet und wobei bei Vorliegen des vordefinierten Betriebszustandes der Produktions- oder Werkzeugmaschine (10) eine Verwaltungsmaßnahme des App-Managementsystems (40) in Bezug auf das Edge-System (50) verhindert wird.

10. Verfahren nach Anspruch 9, wobei die Verwaltungsmaßnahme eine Installation einer App in dem Edge-System (50), ein Update einer Firmware des Edge-Systems (50), eine Konfiguration der Firmware und/oder eine Konfiguration von Netzwerkeinstellungen des Edge-Systems (50) ist.

11. Verfahren nach einem der vorhergehenden Ansprüche, wobei die App (30) kontinuierlich ermittelt, ob der vordefinierte Betriebszustand vorliegt

12. Verfahren nach einem der vorhergehenden Ansprüche, wobei die Produktions- oder Werkzeugmaschine (10) nach einem Empfang eines Freigabebefehls von dem externen App-Managementsystem (40) die Verhinderung von Verwaltungsmaßnahmen des externen App-Managementsystems (40) beendet.

13. Produktions- oder Werkzeugmaschine (10), umfassend
- eine Steuerung zur Steuerung von Aktoren der Produktions- oder Werkzeugmaschine (10),
- einen Speicher (53) mit zumindest einer darin gespeicherten App (30) zur Bereitstellung von Zusatzfunktionalitäten für die Produktions- oder Werkzeugmaschine (10),
- eine Schnittstelle (51) zu einem externen App-Managementsystem (40), über die die App (30) während des Betriebs der Produktions- oder Werkzeugmaschine (10 durch das App-Managementsystem (40) verwaltbar ist,
**dadurch gekennzeichnet, dass** die Produktions- oder Werkzeugmaschine (10) ausgebildet ist, bei Vorliegen eines vordefinierten Betriebszustandes der Produktions- oder Werkzeugmaschine (10) eine Verwaltungsmaßnahme des App-Managementsystems (40) in Bezug auf die App (30) zu verhindern.

14. Computerprogramm, umfassend Befehle, die bei der Ausführung des Programms durch eine Produktions- oder Werkzeugmaschine (10) diese veranlassen, das Verfahren nach einem der Ansprüche 1 bis 12 auszuführen.

15. Computerlesbares Speichermedium umfassend Befehle, die bei der Ausführung durch eine Produktions- oder Werkzeugmaschine (10) diese veranlassen, das Verfahren nach einem der Ansprüche 1 bis 12 auszuführen.
